# EUROPÄISCHE PATENTSCHRIFT

(11) **EP 2 201 833 B1**
(45) Veröffentlichungstag und Bekanntmachung des Hinweises auf die Patenterteilung: **11.06.2014**
(21) Anmeldenummer: 09169052.9
(22) Anmeldetag: 31.08.2009
(51) Int. Cl.: A01B 35/22, A01B 61/04

(54) **Gefederter Grubberzinken**
Spring-loaded grubber tooth
Blair de sacrificateur à ressort

(30) Priorität: 23.12.2008 DE 102008062832
(43) Veröffentlichungstag der Anmeldung: 30.06.2010
(73) Patentinhaber: Treffler, Paul, 86554 Pöttmes-Echsheim (DE)
(72) Erfinder: Treffler, Paul, 86554 Pöttmes-Echsheim (DE)
(74) Vertreter: Charrier, Rapp & Liebau

(56) Entgegenhaltungen:
- AU-B2- 458 148
- FR-A- 1 315 840
- FR-A1- 2 605 482
- GB-A- 225 500

## Beschreibung

Die Erfindung betrifft einen Grubberzinken nach dem Oberbegriff des Patentanspruchs 1. Ein derartiger Grubberzinken ist aus der AU 458148 bekannt. Die Erfindung betrifft außerdem einen Grubber mit mehreren derartigen Grubberzinken.

Grubber werden in der Landwirtschaft zum Auflockern und Umbruch von Böden, insbesondere für die flache Stoppelbearbeitung, eingesetzt. Sie weisen in der Regel einen an ein Zugfahrzeug ankoppelbaren Grundrahmen auf, der mittels vorderer Stützräder und hinterer Packerwalzen in der Höhe verstellbar geführt ist. An dem Grundrahmen sind mehrere Grubberzinken befestigt, die üblicherweise in mehreren Reihen zueinander versetzt angeordnet sind. Bei den bisher bekannten Grubbern sind die Grubberzinken vielfach über Spiralfedern an dem Grundrahmen befestigt. Derartige Grubberzinken können aber seitlich ausweichen und werden bei einem entsprechenden Zugwiderstand relativ schnell nach oben ausgelenkt, wodurch sich eine ungleichmäßige Bodenbearbeitung ergibt.

Aufgabe der Erfindung ist es, einen Grubberzinken und einen Grubber mit mehreren derartigen Grubberzinken zu schaffen, die eine präzisere und gleichmäßigere Bodenbearbeitung ermöglichen.

Diese Aufgabe wird durch einen Grubberzinken mit den Merkmalen des Anspruchs 1 und durch einen Grubber mit den Merkmalen des Anspruchs 7 gelöst. Zweckmäßige Ausgestaltungen und vorteilhafte Weiterbildungen der Erfindung sind in den Unteransprüchen angegeben.

Bei dem erfindungsgemäßen Grubberzinken ist der durch eine Feder beaufschlagte und über eine Halterung schwenkbar an einem Träger eines Grubbers angeordnete Grubberstiel um eine an der Halterung befestigte Querachse schwenkbar, wobei die Querachse oberhalb des Trägers und in Zugrichtung des Grubbers vor der Spitze eines am unteren Ende der Grubberstiels angeordneten Scharblatts liegt. Durch eine derartige Anlenkung wird eine Tiefenregulierung nach Zugwiderstand erreicht, ohne dass sich dabei die Arbeitsstellung des Scharblatts wesentlich verändert. Durch die Federung, die harte Schläge und Belastungsspitzen abfedert, können auch dünne Gänsefußschare verwendet werden, die ihre Schnittqualität länger beibehalten und dadurch eine geringere Zugkraft benötigen. Durch die Federung und die Stellung des oberen Drehpunkts wird eine exakte Tiefenregulierung erreicht, die mit herkömmlichen Grubberzinken bisher nicht möglich war. Der Grubberstiel ist über eine an seinem oberen Ende befestigte Lagerbuchse drehbar auf der Querachse gelagert. Als Feder wird in bevorzugter Weise eine Blattfeder eingesetzt, die zwischen der Halterung und einer Führung angeordnet ist. Dadurch wird eine gute Seitenführung des Grubberstiels erreicht. Durch die obere Lagerung und die an der Blattfeder befestigte untere Führung kann der Grubberstiel nicht zur Seite ausweichen, so dass eine gleichmäßige Bodenbearbeitung ohne Bearbeitungsfehlstreifen gewährleistet wird. Die Führung enthält zwei voneinander beabstandete Seitenteile, zwischen denen der Grubberstiel seitlich geführt ist. Auf den Seitenteilen ist als Überlastschutz eine Abdeckplatte über Scherschrauben befestigt, wodurch verhindert werden kann, dass Schäden an der Grubberzinkenaufnahme oder am Grubberrahmen entstehen.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine gefederte Grubberzinke in einer Seitenansicht und
- **Figur 2**: die Grubberzinke von Figur 1 in einer Rückansicht.

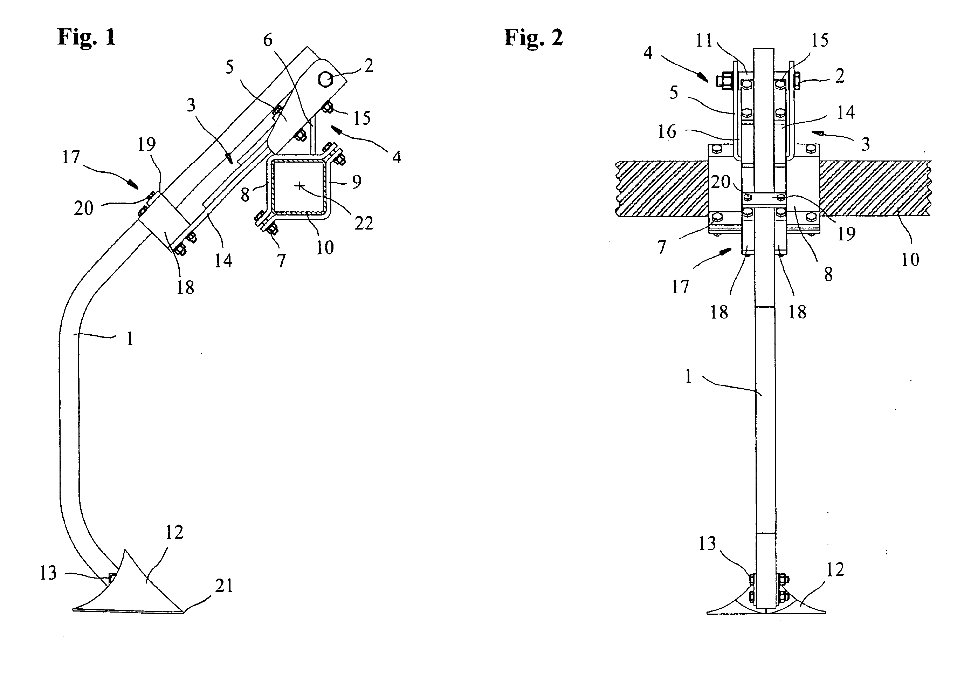

Die in den Figuren 1 und 2 dargestellte Grubberzinke enthält einen gebogenen Grubberstiel 1, der im oberen Bereich um eine Querachse 2 schwenkbar und durch eine als Blattfeder ausgeführte Feder 3 beaufschlagt an einer Halterung 4 befestigt ist. Die Halterung 4 enthält ein oberes U-förmiges Halteteil 5, das über einen Steg 6 und zwei über Schrauben 7 miteinander verbindbare winkelförmige Befestigungsschellen 8 und 9 schräg nach unten geneigt an einem als Querträger ausgebildeten Träger 10 eines Grubbers befestigt ist. Die Querachse 2 wird durch eine Schraube gebildet, die durch miteinander fluchtende Bohrungen in den beiden seitlichen Schenkeln des U-förmigen Halteteils 5 verläuft. Auf der als Schraube ausgeführten Querachse 2 sitzt eine Lagebuchse 11, die mit dem oberen Ende des Grubberstiels 1 verschweißt oder auf andere geeignete Weise fest mit diesem verbunden ist. An dem unteren Ende des Grubberstiels ist ein Scharblatt 12 über Schrauben 13 auswechselbar befestigt.

Wie aus Figur 1 hervorgeht, enthält die Blattfeder 3 mehrere aufeinander liegende Federblätter 14, die im oberen Bereich über Schrauben 15 auf dem unteren Quersteg 16 des U-förmigen Halteteils 5 befestigt sind. Der untere Teil des unteren Federblatts 14 ist über eine Führung 17 mit dem Grubberstiel 1 verbunden. Durch die Blattfeder 3 wird die Grubberzinke bei einer Auslenkung nach oben wieder in die gemäß Figur 3 dargestellte untere Ausgangslage zurückgestellt. Die Führung 17 besteht aus zwei voneinander beabstandeten Seitenteilen 18, zwischen denen der Grubberstiel 1 seitlich abgestützt geführt ist. Auf den beiden Seitenteilen 18 ist eine obere Abdeckplatte 19 über Scherschrauben 20 befestigt. Die durch die Scherschrauben 20 befestigte Abdeckplatte 19 bildet eine Überlastsicherung für den Fall, dass der Zugwiderstand z.B. aufgrund eines Hindernisses einen zulässigen Wert übersteigt.

In Figur 1 ist erkennbar, dass die Querachse 2 oberhalb des Trägers 10 und in Zugrichtung des Grubbers vor der Spitze 21 eines am unteren Ende der Grubberstiels 1 angeordneten Scharblatts 12 liegt. Durch eine derartige Anlenkung wird eine Tiefenregulierung nach Zugwiderstand erreicht, ohne dass sich dabei die Arbeitsstellung des Scharblatts wesentlich verändert. In einer für die Stoppelbearbeitung besonders vorteilhaften Ausführung ist die Querachse ca. 25 cm vor der Spitze 21 des Scharblatts 12 in einer Höhe von etwa 1m angebracht. Aus Figur 1 ist auch ersichtlich, das die Querachse 2 und damit die Drehachse des Grubberstiels 1 vor der Mittelachse 22 des Trägers 10 liegt und damit gegenüber dem Träger 10 in Zugrichtung des Grubbers nach vorne versetzt ist.

## Patentansprüche

1. Grubberzinken mit einem durch eine Feder (3) beaufschlagten Grubberstiel (1), der über eine Halterung (4) schwenkbar an einem Träger (10) eines Grubbers angeordnet ist und an seinem unteren Ende ein Scharblatt (12) aufweist, wobei der Grubberstiel (1) um eine an der Halterung (4) befestigte Querachse (2) zwischen zwei voneinander beabstandeten Seitenteilen (18) einer Führung (17) schwenkbar angeordnet ist und wobei die Querachse (2) oberhalb des Trägers (10) und in Zugrichtung des Grubbers vor einer Spitze (13) des Scharblatts (12) angeordnet ist, **dadurch gekennzeichnet, dass** auf den Seitenteilen (18) eine Abdeckplatte (19) über Scherschrauben (20) befestigt ist.

2. Grubberzinken nach Anspruch 1, **dadurch gekennzeichnet, dass** der Grubberstiel (1) über eine an seinem oberen Ende befestigte Lagerbuchse (11) drehbar auf der Querachse (2) gelagert ist.

3. Grubberzinken nach Anspruch 1 oder 2, **dadurch gekennzeichnet, dass** die Feder (3) als eine zwischen der Halterung (4) und der Führung (17) angeordnete Blattfeder ausgebildet ist.

4. Grubberzinken nach einem der Ansprüche 1 bis 3, **dadurch gekennzeichnet, dass** die Halterung (4) ein oberes U-förmiges Halteteil (5) enthält, das über einen Steg (6) und winkelförmige Befestigungsschellen (8, 9) schräg nach unten geneigt an dem Träger (10) befestigt ist.

5. Grubberzinken nach Anspruch 4, **dadurch gekennzeichnet, dass** die Querachse (4) durch die beiden Schenkel des U-förmigen Halteteils (5) verläuft.

6. Grubberzinken nach Anspruch 4 oder 5, **dadurch gekennzeichnet, dass** die Feder (3) mehrere übereinander liegende Federblätter (14) enthält, die im oberen Bereich auf einem unteren Quersteg (16) des U-förmigen Halteteils (5) befestigt sind.

7. Grubber mit mehreren an einem Träger angeordneten Grubberzinken, **dadurch gekennzeichnet, dass** die Grubberzinken nach einem der Ansprüche 1 bis 6 ausgebildet sind.

## Claims

1. Cultivator spring tine with a cultivator leg (1) which is subject to the action of a spring (3) and arranged so as to pivot by means of a mounting (4) on a carrier (10) of a cultivator and at its lower end exhibits a blade (12), the cultivator leg (1) being arranged so as to pivot between two spaced side parts (18) of a guide (17) about a transverse pivot (2) fastened to the mounting (4) and the transverse pivot (2) being arranged above the carrier (10) and in front of a point (13) of the blade (12) in the towing direction of the cultivator, **characterised in that** a cover plate (19) is fastened to the side parts (18) by means of shearing screws (20).

2. Cultivator spring tine according to claim 1, **characterised in that** the cultivator leg (1) is mounted so as to turn on the transverse pivot (2) by means of a bearing bush (11) fastened at its upper end.

3. Cultivator spring tine according to claim 1 or 2, **characterised in that** the spring (3) is embodied as a leaf spring arranged between the mounting (4) and the guide (17).

4. Cultivator spring tine according to one of claims 1 to 3, **characterised in that** the mounting (4) comprises an upper U-shaped holding part (5) which is fastened facing obliquely downwards on the carrier (10) by means of a web (6) and angular fastening clamps (8, 9).

5. Cultivator spring tine according to claim 4, **characterised in that** the transverse pivot (4) runs through the two limbs of the U-shaped holding part (5).

6. Cultivator spring tine according to claim 4 or 5, **characterised in that** the spring (3) comprises a plurality of spring leaves (14) lying one above another which are fastened in the upper region on a lower transverse web (16) of the U-shaped holding part (5).

7. Cultivator with a plurality of cultivator spring tines arranged on a carrier, **characterised in that** the cultivator spring tines are embodied according to one of claims 1 to 6.

## Revendications

1. Dent de cultivateur avec un manche de cultivateur (1) sollicité par un ressort (3), qui est agencée de manière pivotante par le biais d'une fixation (4) sur un support (10) d'un cultivateur, et présente sur son extrémité inférieure une lame de soc (12), le manche de cultivateur (1) étant agencé de manière pivotante autour d'un axe transversal (2) fixé sur la fixation (4) entre deux parties latérales (18) espacées l'une de l'autre d'un guidage (17) et l'axe transversal (2) étant agencé au-dessus du support (10) et dans le sens de traction du cultivateur devant une pointe (13) de la lame de soc (12), **caractérisée en ce qu'**une plaque de recouvrement (19) est fixée sur les parties latérales (18) par des vis de cisaillement (20).

2. Dent de cultivateur selon la revendication 1, **caractérisée en ce que** le manche de cultivateur (1) est logé de manière rotative sur l'axe transversal (2) par le biais d'un coussinet (11) fixé sur son extrémité supérieure.

3. Dent de cultivateur selon la revendication 1 ou 2, **caractérisée en ce que** le ressort (3) est réalisé comme un ressort à lame disposé entre la fixation (4) et le guidage (17).

4. Dent de cultivateur selon l'une quelconque des revendications 1 à 3, **caractérisé en ce que** la fixation (4) contient une partie de retenue (5) supérieure en forme de U qui est fixée par une nervure (6) et des colliers de fixation (8, 9) angulaires de manière inclinée en biais vers le bas sur le support (10).

5. Dent de cultivateur selon la revendication 4, **caractérisée en ce que** l'axe transversal (4) s'étend au travers des deux branches de la partie de retenue (5) en U.

6. Dent de cultivateur selon la revendication 4 ou 5, **caractérisée en ce que** le ressort (3) contient plusieurs lames de ressort (14) se trouvant l'une sur l'autre qui sont fixées dans la zone supérieure sur une nervure transversale (16) inférieure de la partie de retenue (5) en U.

7. Cultivateur avec plusieurs dents de cultivateur disposées sur un support, **caractérisé en ce que** les dents de cultivateur sont réalisées selon l'une quelconque des revendications 1 à 6.
